(19) **Europäisches Patentamt**

**European Patent Office**

**Office européen des brevets**

(11) **EP 0 916 026 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **97936656.4**

(22) Anmeldetag: **25.07.1997**

(51) Int Cl.⁷: **F04D 15/00**, H02P 7/628

(86) Internationale Anmeldenummer:
**PCT/EP97/04041**

(87) Internationale Veröffentlichungsnummer:
**WO 98/04835 (05.02.1998 Gazette 1998/05)**

(54) **VERFAHREN ZUR REGELUNG EINES AGGREGATS UND FREQUENZUMRICHTER**

PROCESS FOR REGULATING A UNIT OR A FREQUENCY CONVERTER

PROCEDE DE REGULATION D'UNE UNITE ET D'UN CONVERTISSEUR DE FREQUENCE

(84) Benannte Vertragsstaaten:
**CH DE IT LI**

(30) Priorität: **29.07.1996 DE 19630384**

(43) Veröffentlichungstag der Anmeldung:
**19.05.1999 Patentblatt 1999/20**

(73) Patentinhaber: **Gebr. Becker GmbH & Co.**
**42279 Wuppertal (DE)**

(72) Erfinder:
• **HENNING, Hans-Heinrich**
**D-58256 Ennepetal (DE)**
• **WINKELSTRÖTER, Walter**
**D-42289 Wuppertal (DE)**
• **HOLLMANN, Carldieter**
**D-58456 Witten (DE)**
• **HEISLER, Olaf**
**D-58256 Ennepetal (DE)**
• **FROHN, Dieter**
**D-42287 Wuppertal (DE)**
• **HILVERKUS, Achim**
**D-42929 Wermelskirchen (DE)**

(74) Vertreter: **Müller, Enno, Dipl.-Ing. et al**
**Rieder & Partner**
**Anwaltskanzlei**
**Corneliusstrasse 45**
**42329 Wuppertal (DE)**

(56) Entgegenhaltungen:
EP-A- 0 226 858     EP-A- 0 584 713
EP-A- 0 644 333     DE-A- 3 824 057
DE-A- 4 423 736     GB-A- 2 190 519

**Beschreibung**

Die Erfindung betrifft ein Verfahren zur Regelung eines mittels eines Drehstrom- oder Wechselstrommotors angetriebenen Aggregates wie einer Pumpe oder eines Verdichters, bspw. eines Seitenkanalverdichters, mit Förderkennwerten wie Volumenstrom bzw. Massenstrom oder Druckdifferenz, wobei dem Drehstrommotor ein Frequenzumrichter vorgeschaltet ist und in oder nach dem Frequenzumrichter eine Messung des elektrischen Stromes oder der hierzu proportionalen elektrischen Spannung erfolgt.

Derartige Aggregate mit vorgeschaltetem Frequenzumrichter sind bekannt. Arbeitsmaschinen, wie z. B. Gebläse oder Vakuumpumpen, werden durch über Frequenzumrichter gespeiste Drehstrom- oder Wechselstrommotoren angetrieben. Mit Hilfe eines Frequenzumrichters können Frequenzen abweichend von der Netzfrequenz eingestellt werden und die Leistung einer solchen Arbeitsmaschine ohne Veränderung ihres Aufbaus bspw. über einen an sich bei konstanter Frequenz gegebenen Grenzwert hinaus gesteigert werden. Die Antriebsdrehzahl eines solchen Elektromotors kann mit Hilfe des Frequenzumrichters nahezu beliebig verstellt werden. Damit kann die Leistung exakt an den jeweiligen Bedarf angepaßt werden.

Hinsichtlich der genannten Förderkennwerte ist am Beispiel eines Seitenkanalverdichters als Arbeitsmaschine der Volumenstrom in Abhängigkeit von der Druckdifferenz und die Leistungsaufnahme in Abhängigkeit von der Druckdifferenz von Bedeutung. Darüber hinaus ist auch die Temperatur in Abhängigkeit von der Druckdifferenz von Interesse, da jedenfalls eine obere Grenztemperatur zu beachten ist. Der Betriebspunkt eines solchen Verdichters ergibt sich als Schnittpunkt einer Verbraucherund einer Verdichterkennlinie. Es kann sich nun ergeben, daß der an sich gegebene Betriebspunkt jenseits von einem durch das Aggregat vorgegebenen Grenzwert liegt, bspw. oberhalb einer möglichen, etwa durch eine maximal zulässige Temperatur im Verdichter gekennzeichneten, Druckdifferenz. Man hat sich diesbezüglich bereits damit geholfen, daß nachgeschaltet zu dem Verdichter ein Ablaßventil vorgesehen ist, das bei zu hoher Druckdifferenz öffnet. Ersichtlich ist diese Vorgehensweise aber sehr nachteilig, da ein Teilstrom des durch den Verdichter geförderten Mediums ungenutzt abgeblasen wird. Ein Teil der zur Verdichtung oder Vakuumerzeugung eingesetzten Energie bleibt ungenutzt.

In diesem Zusammenhang ist bereits weiter vorgeschlagen worden, bei über Frequenzumrichter angetriebenen Motoren einen Regler vorzusehen, welcher in Abhängigkeit von gemessenen Werten wie Druck oder Strömung im Verbrauchersystem eine Leistungsanpassung vornimmt. Ersichtlich ist hier aber neben dem gesonderten Regler-Aggregat eine aufwendige Sensorik erforderlich. Jedoch läßt sich durch eine Messung des Druckes im Verbrauchssystem bei dieser Lösung bereits eine Regelung auf konstanten Betriebsdruck ohne Zusatzverluste durchführen.

Im Stand der Technik ist es aus der GB-PS 2 190 509 für die Regelung einer mittels eines Drehstrommotors angetriebenen Klimaanlage bekannt, einen Kennlinienspeicher vorzusehen. In diesem sind vier verschiedene Spannungs-/Frequenzlinien abgespeichert. Es sind nicht nur die Kennlinien abgespeichert, sondern auch diesen Kennlinien entsprechende Spannungsgrößendaten. Im Hinblick auf die abgespeicherten Kennlinien ist ein Kennlinienwähler vorgesehen, der in Abhängigkeit von gemessenen Temperaturen bestimmt, welche Kennlinie gefahren werden soll. Ist eine bestimmte Kennlinie gewählt, wird sodann ein entsprechendes Signal an eine Treiberschaltung gegeben, welche ein Treibersignal zur Basis von Umschalttransistoren der Hauptschaltung des Frequenzumrichters liefern.

Im Hinblick auf den vorbeschriebenen Stand der Technik beschäftigt sich die Erfindung mit der technischen Problematik, ein verbessertes Verfahren zur Regelung eines wie vorstehend beschriebenen Aggregates anzugeben. Bei möglichst vermindertem Aufwand soll in energetisch vorteilhafter Weise eine einfache Regelung möglich sein.

Diese technische Problematik ist beim Gegenstand des Anspruches 1 zunächst und im wesentlichen dadurch gelöst, daß empirisch eine Stromkennlinie oder eine Leistungskennlinie für einen Förderkennwert in Abhängigkeit von der Frequenz ermittelt wird, daß die Kennlinie in einem Speicherelement niedergelegt wird und daß eine gewünschte Förderkurve oder ein gewünschter Förderkennwert hiervon ausgehend durch eine Umrechnung der zugehörigen Stromstärke oder der zugehörigen elektrischen Leistung rechnerisch ermittelt wird. Die Einstellung des Frequenzumrichters ist auf die Größe "Strom" reduziert. Zudem ist erkannt worden, daß nur eine empirisch gefundene Kurve in einem Speicher niederlegt werden muß und die anderen Förderweite hieraus durch Umrechnung errechnet werden können. Es ist nicht erforderlich, zunächst ein Frequenzeinstell- oder Vorgabesignal zu erzeugen, daß zur Auswahl einer bestimmten von mehreren vorab gespeicherten Kennlinien dient und in Abhängigkeit davon dann von der ausgewählten Kennlinie Signale zu einer Treiberschaltung zu geben.

Der elektrische Strom kann auch über den hierzu - über die Spannung- proportionalen Wert der elektrischen Leistung gemessen werden. Die Messung erfolgt in Abhängigkeit der aktuellen Frequenz. Erfindungsgemäß ist erkannt worden, daß, in Abhängigkeit von der Frequenz, bei einem Aggregat wie bspw. einem Seitenkanalverdichter ein mathematisch beschreibbarer bspw. sogar im wesentlichen linearer Zusammenhang zwischen der Stromstärke bzw. der elektrischen Leistung und einem Förderkennwert, wie etwa der Druckdifferenz, gegeben ist. Wie weiter unten noch ausgeführt, konnte im weiteren ermittelt werden, daß der angesprochene Zusammenhang sogar im wesentlichen ein quadratischer ist. Hiervon ausgehend ist weiter erkannt worden, daß dann, wenn eine solche Kennlinie bekannt ist, durch Umrechnung, ohne daß eine sensorische Überprüfung im Verbrauchernetz oder Aggregat erforderlich ist, ein beliebiger anderer Kennwert eingestellt werden kann. Es ist im weiteren nur erforderlich, die Höchst- bzw. Grenzwerte des zulässigen Stromes bzw. der zulässigen elektrischen Leistung zu kennen. Diese Grenzwerte ergeben sich aus den maximal zulässigen Drehzahlen, dem maximal zulässigen Motorstrom, der maximal zulässigen elektrischen Leistung des Frequenzumrichters und den maximal zulässigen Betriebstemperaturen für den Frequenzumrichter, den Motor und den Verdichter bzw. die Pumpe. Sodann ist ein Feld gegeben, in welchem beliebige Werte eingestellt oder beliebige Kennlinien gefahren werden können. Die Regelung erfolgt ausgerichtet an der gemessenen Stromstärke bzw. der ermittelten elektrischen Leistung und der Frequenz. Entsprechend sieht die Erfindung vor, daß die Stromstärke (die elektrische Leistung), die in oder nach dem Frequenzumrichter ermittelt wird, kombiniert mit einem Förderkennwert wie einer Druckdifferenz oder einem Volumenstrom, welcher bezogen auf die Frequenz einen Parameter darstellt, zur Einstellung eines Betriebspunktes innerhalb eines Kennlinienfeldes genutzt wird. Es wird experimentell bzw. empirisch eine Stromkennlinie oder eben eine Leistungskennlinie in Abhängigkeit von der Frequenz für einen Förderkennwert wie etwa eine Druckdifferenz als Parameter ermittelt und hiervon ausgehend gewünschte Betriebspunkte bei geänderten Parametern durch eine Umrechnung der zugehörigen Stromstärke oder elektrischen Leistung errechnet. Aufgrund der bekannten Zusammenhänge zwischen Volumenstrom und Druckdifferenz in Abhängigkeit von der Frequenz kann mit einem durch eine Druckdifferenz und eine bestimmte Stromstärke oder elektrische Leistung gekennzeichneten Punkt eines Kennfeldes auch ein gewünschter Volumenstrom erreicht werden, bzw. ausgehend von einem gewünschten Volumenstrom eine zugehörige oder zulässige Druckdifferenz und hierzu entsprechende Stromstärke oder elektrische Leistung in Abhängigkeit von der Frequenz ermittelt werden. Es kann auch eine praktisch beliebige Kennlinie in einfacher Weise gefahren werden.

Im weiteren wird das Verfahren bevorzugt derart durchgeführt, daß der gemessene elektrische Strom oder die gemessene elektrische Leistung mit einem in Abhängigkeit von der Aggregatleistung zulässigen maximalen Strom oder einer zulässigen maximalen elektrischen Leistung verglichen wird und daß ein Überschreiten des jeweilig zulässigen Stromes bzw. der jeweilig zulässigen Leistung unterbunden wird. Seine Kennlinie oder ein bestimmter Betriebspunkt wird derart gefahren oder angesteuert, daß nur ein maximal zulässiger Strom oder eine maximal zulässige elektrische Leistung erreicht wird, aber jeweils nicht überschritten wird.

Bei dem in dem Frequenzumrichter enthaltenen Speicherelement kann es sich bspw. um ein EPROM oder EEPROM handeln. Bevorzugt ist eine charakteristische Kurve des Zusammenhangs zwischen dem elektrischen Strom oder der elektrischen Leistung und Frequenz bezüglich eines ausgewählten Parameters, wie etwa der Druckdifferenz oder des Volumen- bzw. Massenstroms im Falle eines Seitenkanalverdichters, niedergelegt. Darüber hinaus auch der Grenzstrom in Abhängigkeit der Frequenz und der Temperatur. Bei einem Frequenzumrichter mit Vektorregelung wird die zur Kennlinienregelung herangezogene Leistung aus dem geregelten Drehmoment und der Drehzahl ermittelt. Vorteilhafterweise kann mittels eines Frequenzumrichters gemäß einer der vorstehend beschriebenen Ausbildungen die Regelung eines genannten Aggregates ohne eine in das Aggregat oder ein nachgeschaltetes Verbrauchernetz eingebaute Sensorik durchgeführt werden. Ein gesonderter Regler kann entfallen. In weiterer Einzelheit ist es auch möglich, den Strom innerhalb des Frequenzumrichters vor oder hinter dem Wechselrichter zu messen. Soweit die elektrische Leistung zur Regelung herangezogen werden soll, kann sie hieraus berechnet werden. Da zwischen Spannung und Frequenz bei einem Frequenzumrichter ein definierter Zusammenhang besteht (Frequenzumrichter mit U/f-Kennliniensteuerung), kann man sich auf die Frequenz und den Strom bzw. die daraus berechnete elektrische Leistung als Variable beschränken. Der Strom ist eine Funktion der Leistungsaufnahme der Arbeitsmaschine und der Motorcharakteristik. Die Leistungsaufnahme der Arbeitsmaschine ist eine Funktion des Verbrauchersystems und der Drehfrequenz. Die Frequenz wird vom Anwender vorgewählt, z.B. mit Hilfe eines variablen Widerstandes, sie kann aber auch durch den Regler (Frequenzumrichter) in Verknüpfung mit dem zur Regelung herangezogenen elektrischen Strom oder der elektrischen Leistung eingeregelt werden. Die in dem Frequenzumrichter oder zugeordnet zu dem Frequenzumrichter niedergelegten Leistungs-Frequenz-Kennlinien können durch externe Einstellungen parametriert werden. D.h. ein Parameter kann geändert und ein anderer Betriebspunkt angesteuert werden. In diesem Zusammenhang wird insbesondere auch vorgeschlagen, daß der Frequenzumrichter ein integriertes Potentiometer oder eine vergleichbare Einrichtung aufweist, zur unmittelbaren Einwirkung auf den genannten elektrischen Strom bzw. die genannte elektrische Leistung. Dies zur Einstellung on Drehzahl oder Druck bzw. Massenstrom. Wird durch eine Höherbelastung der Arbeitsmaschine, z.B. durch Zuschalten eines Verbrauchers, die Grenzkennlinie für den Strom bzw. die Leistung und die Frequenz verlassen, so regelt der Regler die Frequenz derart, daß die Grenzkennlinie (Soll-Leistungskennlinie) gerade wieder erreicht wird. Auf diese Art können nahezu beliebige Arbeitsmaschinen-Kennlinien gefahren werden. Hinsichtlich des Frequenzumrichters kann auch, wie bereits weiter oben erwähnt, ein sogenannter Vektor-Umrichter zur Anwendung kommen. Hierbei wird der dort gesondert gemessene Stromanteil Iμ entsprechend den vorstehenden Ausführungen zur Einstellung eines Förderkennwertes herangezogen.

Nachstehend ist die Erfindung anhand der beigefügten Zeichnungen, die jedoch lediglich Ausführungsbeispiele betreffen, erläutert. Hierbei zeigt:

Fig. 1      ein grundsätzliches Schaltbild eines auf ein Verbrauchernetz arbeitenden Seitenkanalverdichters, ohne Frequenzumrichter;

Fig. 2      ein Diagramm, das den grundsätzlichen Zusammenhang zwischen Volumenstrom und Druckdifferenz bei einem Seitenkanalverdichter wiedergibt;

Fig. 3      ein weiteres Diagramm, das den Zusammenhang zwischen Leistungsaufnahme und Druckdifferenz darstellt;

Fig. 4      ein Diagramm, das den Zusammenhang zwischen einer im Verdichter erreichten Temperatur und der Druckdifferenz darstellt;

Fig. 5      eine Darstellung gemäß Fig. 1, jedoch mit einem Frequenzunirichter und einem vorgeschalteten Regler;

Fig. 6      ein Diagramm, das den Zusammenhang zwischen dem Volumenstrom und der Druckdifferenz mit der Frequenz als Parameter wiedergibt;

Fig. 7      ein Fig. 6 entsprechendes Diagramm, jedoch mit der Auftragung der Leistung über der Druckdifferenz;

Fig. 8      ein weiteres Diagramm entsprechend Fig. 6 oder Fig. 7 jedoch mit der im Aggregat (Verdichter) vorliegenden Temperatur über der Druckdifferenz aufgetragen;

Fig. 9      eine Darstellung gemäß Fig. 1 bzw. Fig. 5, lediglich mit einem Frequenzumrichter, der auf einen Drehstrommotor und einen mit letzterem verbundene Seitenkanalverdichter wirkt;

Fig. 10     ein Fig. 2 entsprechendes Diagramm, zur Erläuterung einer beispielhaften Kennlinie im Zusammenhang mit den Fig. 11 und 12

Fig. 11     ein Diagramm, das den im Frequenzumrichter gemessenen Strom in Abhängigkeit von der im Seitenkanalverdichter gefahrenen Druckdifferenz mit der Frequenz als Parameter darstellt;

Fig. 12     ein Diagramm, das den Strom über der Frequenz mit der Druckdifferenz als Parameter darstellt;

Fig. 12a    ein Diagramm gemäß Fig. 12, mit einer, einer quadratischen Gleichung folgenden, realen Meßwerten unterlegten Kurve; und

Fig. 13     ein beispielhaftes Kennfeld eines Seitenkanalverdichters mit charakteristischen Grenzlinien.

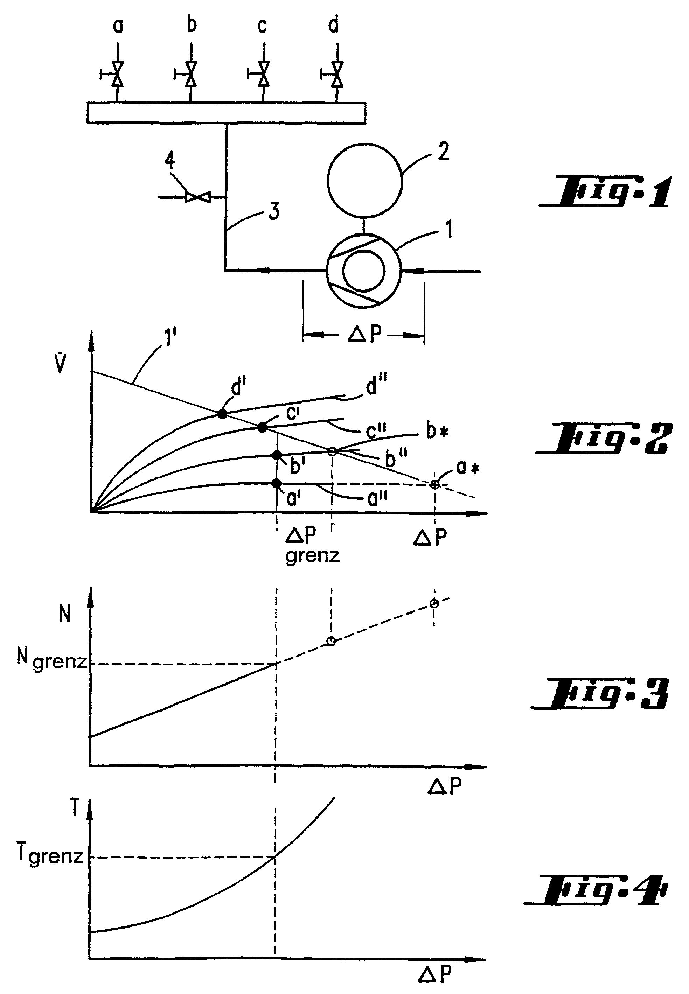

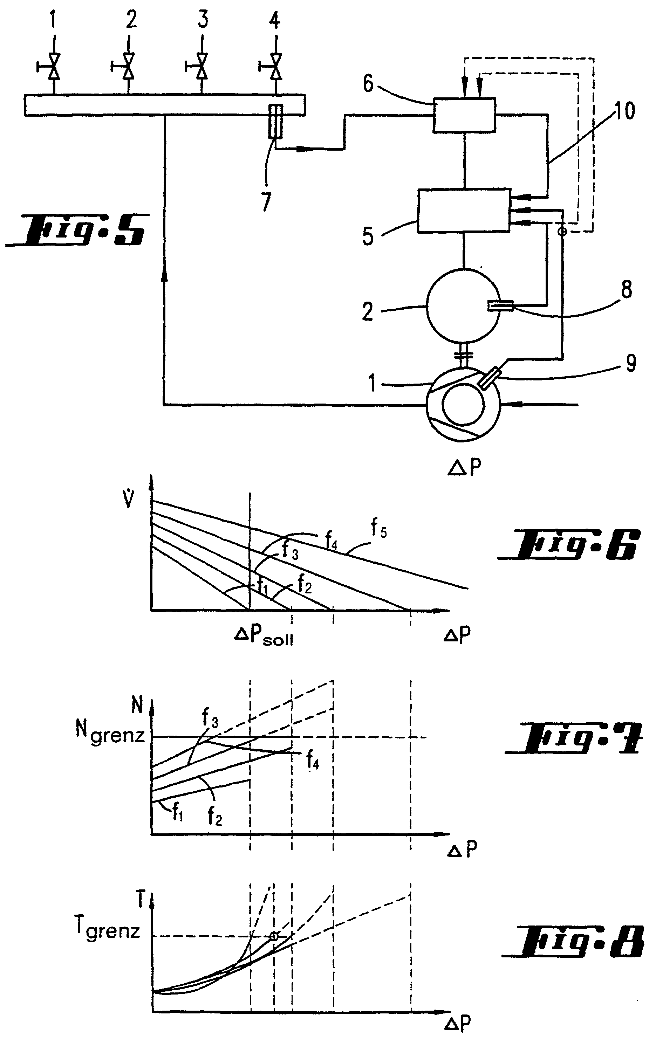

Dargestellt und beschrieben ist, zunächst mit Bezug zur Fig. 1, ein Anlagenschema. Bei diesem Anlagenschema ist ein Seitenkanalverdichter 1 vorgesehen, der von einem Drehstrommotor 2 angetrieben wird. Der Seitenkanalverdichter 1 arbeitet über eine Leitung 3 auf in einem Netz angeordnete Verbraucher a, b, c, d. In der Leitung 3 ist ein Abblasventil 4 angeordnet. Der Seitenkanalverdichter arbeitet mit der Druckdifferenz Delta p. Hierbei handelt es sich um ein herkömmliches, noch nicht erfindungsgemäß gestaltetes Anlagenschema. Es dient nur zur Erläuterung des Ausgangspunktes der Erfindung. Bei einem solchen Anlagenschema stellen sich grundsätzlich, vgl. Fig. 2, Betriebspunkte a', b', c' und d' ein. Hierbei entspricht der Betriebspunkt a' nur dem Betrieb der Verbrauchstelle a in Fig. 1, b' den Betrieb von Verbrauchsstellen a und b in Fig. 1 usw..

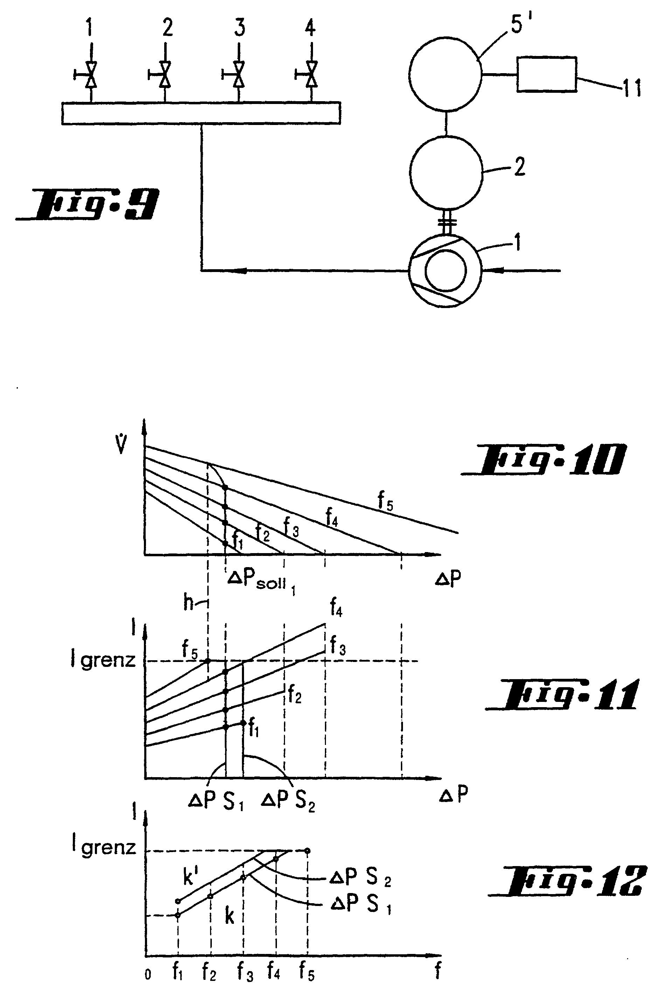

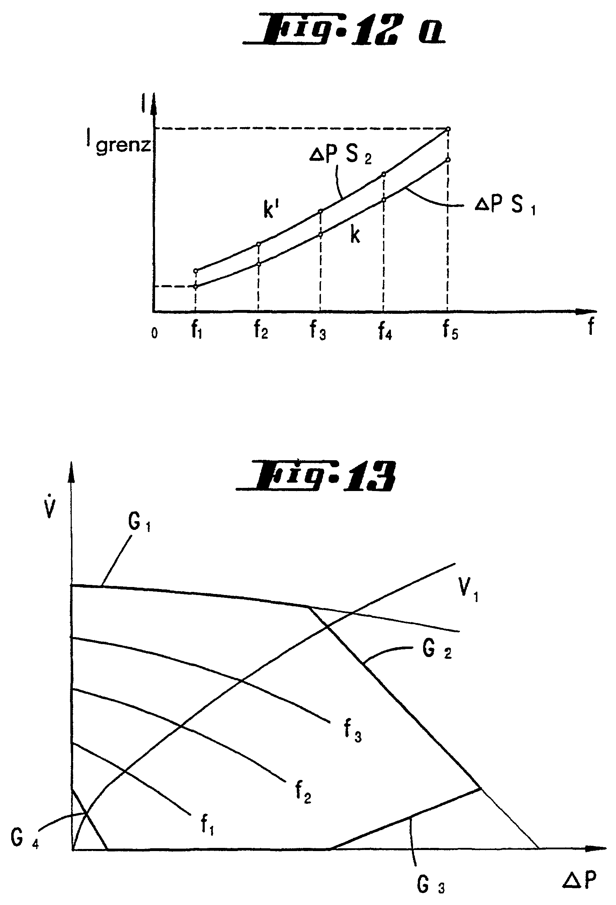

Wie bekannt liegen diese Betriebspunkte einerseits auf der zugehörigen Verbraucherkennlinie a", b", c" bzw. d" and andererseits auf dem Schnittpunkt mit der Förderkennlinie 1' des Seitenkanalverdichters selbst. Weiter besitzt der Seitenkanalverdichter eine maximal leistbare Druckdifferenz, welche in Fig. 2 mit Delta p grenz angegeben ist. Wie ersichtlich würden die Betriebspunkte a' und b' an sich, vgl. a* und b*, einem Delta p zugehörig liegen, das nicht erreicht werden kann. Dies aufgrund der Tatsache, daß die erforderliche Antriebsleistung oberhalb der erreichbaren Grenzleistung N grenz (vgl. Fig. 3) läge. Es ist im übrigen durch die angedeutete Hoch- bzw. Herunterlotung der an sich bekannte Zusammenhang zwischen den Diagrammen angedeutet. Die Leistung N grenz kann durch die maximale Motorleistung oder aber auch durch die maximale Gebläsetemperatur bestimmt sein, bezüglich letzterem vgl. Fig. 4.

Um gleichwohl den Betriebspunkt a' zu erreichen, ist das Ventil 4 vorgesehen, welches öffnet, wenn der Grenzdruck Delta p grenz erreicht ist. Diese Art der Kennlinien-Beeinflussung wird bspw. auch eingesetzt, um parallel geschaltete Verbraucher mit konstantem Druck zu versorgen. Beim Ausführungsbeispiel der Fig. 4 trifft dies auf die Verbraucher a und b bzw. die Betriebspunkte a' und b' zu.

Zur Verbesserung der Anlage gemäß Fig. 1 ist auch bereits eine Anlage gemäß Fig. 5 vorgeschlagen worden. Zusätzlich zu der Anlage gemäß Fig. 1 ist hier ein Frequenzumrichter 5 vorgesehen, auf welchen ein Regler 6 einwirkt. Der Regler 6 arbeitet bspw. mit Sensoren 7, 8, 9, wobei der Sensor 7 ein Drucksensor, der Sensor 8 ein Temperatursensor im Motor und der Sensor 9 ein Temperatursensor im Seitenkanalverdichter sein kann. Die Sensoren 8 und 9 können auch auf den Frequenzumrichter 5 einwirken.

Der Drucksensor 7 mißt den Druck im Verbrauchersystem und gibt ein entsprechendes Meßsignal an den Regler 6. Der Regler 6 gibt über die Leitung 10 ein Ausgangssignal an den Frequenzumrichter 5 dergestalt, daß bei zu niedrigem Druck eine Drehzahlerhöhung und bei zu hohem Druck eine Drehzahlabsenkung erfolgt. Der Sensor 7 kann außer einem Druck- bspw. auch ein Strömungssensor sein, zur Einregelung oder Erreichung eines bestimmten Volumenstromes im Verbrauchersystem.

In Fig. 6 ist der Volumenstrom über der Druckdifferenz aufgetragen, wobei als Parameter verschiedene Frequenzen f1, f2, f3, f4 und f5 eingezeichnet sind. Die Frequenz steigt von f1 zu f5 hin an.

In Fig. 7 ist die Leistung (Leistungsaufnahme) über der Druckdifferenz aufgetragen, wieder mit den Frequenzen f1 usw. als Parameter.

Vergleichbares ist in Fig. 8 aufgetragen, betreffend die Temperatur über der Druckdifferenz, wiederum mit den Frequenzen als Parameter. Die Zusammenhänge zwischen den einzelnen Diagrammen sind wiederum durch gestrichelte vertikale Linien angedeutet.

Es ist ersichtlich, daß sowohl in Fig. 7 wie auch in Fig. 8 eine Grenze durch die Grenzleistung N grenz bzw. die Grenztemperatur T grenz gegeben ist.

Soweit vor- und nachstehend auf den Volumenstrom Bezug genommen ist, versteht sich, daß stattdessen auch der Massenstrom eingesetzt werden kann. Letzteres empfiehlt sich sogar, wenn der Volumenstrom etwa nicht gegenüber der Atmosphäre mit einer bekannten Blende gemessen wird, sondern etwa nur eine Messung innerhalb des Systems zur Verfügung steht. Dies um die bekannten Abweichungen, die sich dann bei der Messung des Volumenstroms aufgrund des Dichteunterschieds einstellen können, auszuschalten.

In Fig. 9 ist ein im Hinblick auf die Fig. 1 und 5 erfindungsgemäß ausgestaltetes Anlagenschema wiedergegeben. Der Frequenzumrichter ist hier mit 5' bezeichnet, da es sich um einen erfindungsgemäß abgewandelten Frequenzumrichter gegenüber dem Frequenzumrichter 5 des Anlagenschemas gemäß Fig. 5 handelt. Im übrigen ist der Regler 6 ersatzlos in Wegfall gekommen. Man kann auch sagen, daß nunmehr ein "intelligenter" Frequenzumrichter 5' vorgesehen ist, der auch Regelungsaufgaben übernehmen kann.

Der Frequenzumrichter 5' wirkt hierzu mit einem Speicher 11 zusammen, in welchem eine Referenzfunktion oder eine Referenzkurve des elektrischen Stroms oder der elektrischen Leistung in Abhängigkeit von der Frequenz gespeichert ist. Bei dem Speicher 11 kann es sich bspw. um ein EPROM oder ein EEPROM handeln. Anstelle einer Referenzfunktion kann es sich auch, wenn sogleich die Betriebspunkte abgespeichert sind, um eine Sollfunktion handeln.

Eine solche Referenzkurve ist in Fig. 12 dargestellt. Hier ist der Strom über der Frequenz aufgetragen. Es ist ersichtlich, daß der Strom zwischen den Frequenzen f1 bis f4 im wesentlichen einer (vertikalen) Geraden folgt. Wie festgestellt wurde, kann die Stromfunktion 4 hier etwa mit

$$I = A * f + B$$

angegeben werden, wobei die Konstante B ihrerseits eine Funktion von Delta p soll 1 (mit Bezug auf Fig. 11, wie nachstehend noch näher erläutert) ist. In guter Näherung kann die Stromfunktion linear angenommen werden.

Wie weitere Überprüfungen jedoch erbracht haben, ist die Funktion tatsächlich bezüglich des Stroms bzw. der elektrischen Leistung eine quadratische Funktion nach folgender Formel:

$$I, N = K + A * f + B * f^2$$

Auch hierbei sind die Konstanten ihrerseits Funktionen von Delta p soll 1. Dieser, den realen Verhältnissen noch besser entsprechende Zusammenhang ist in Fig. 12a dargestellt. In dieser Figur sind tatsächlich gemessene Werte durch eine Kurve gemäß vorstehender Formel verbunden.

In Fig. 11 ist der Strom über Delta p aufgetragen. Die verschiedenen Frequenzen f1 bis f5 (hier wiederum in ansteigender Relation gedacht) sind als Parameterschar eingetragen.

Es ist ersichtlich, daß bei einem ersten gegebenen Delta p soll 1 für die Frequenzen f1 bis f4 die Stromwerte auf einer senkrechten Geraden liegen. Nach oben ist der Stromanstieg durch den Grenzstrom I grenz begrenzt. Bezuglich der Frequenz f5 kann daher nur ein geringeres Delta p gefahren werden als für die vorherigen Frequenzen f1 bis f4. Der Strom ist etwa proportional zur Leistung. Dies ermöglicht es in gleicher Weise auch, wenn, wie auch beschrieben, der elektrische Strom über den hierzu proportionalen Wert der elektrischen Leistung gemessen wird, die elektrische Leistung über der Druckdifferenz bzw. der Frequenz aufzutragen. Die erhaltenen Zusammenhänge sind gleichartig.

In Fig 12 ist zusätzlich zu der gemessenen Kurve (Gerade) k eine hiervon rechnerisch ermittelbare Kurve k', die einem zweiten Delta p entspricht, nämlich bezogen auf Fig. 11 dem Delta p soll 2, eingetragen.

Der in dem Frequenzumrichter, oder danach, gemessene Strom bzw. die ermittelte elektrische Leistung erweist sich somit als wesentlicher Anknüpfungspunkt zur Ausnutzung des Frequenzumrichters im Sinne eines Reglers. Eine Kurve k kann werksseitig gemessen werden und in dem Frequenzumrichter, etwa in der angesprochenen Form eines EPROM oder EEPROM, niedergelegt werden. Sie kann auch etwa erst nach dem Einbau gemessen werden und dann in gleicher Weise abgespeichert werden. Die weiteren Grenzbedingungen, die Grenzleistungen im Hinblick auf die Leistungsfähigkeit des Motors, die Grenzleistung im Hinblick auf die erreichbare Temperatur, der Grenzstrom im Hinblick auf die Belastbarkeit der elektronischen Bauelemente und die Grenzdrehzahl im Hinblick auf die Zuverlässigkeit der Arbeitsmaschine können gleichfalls in dem Speicher abgelegt sein. Sie können entsprechend durch den Stromwert oder den Leistungswert ausgedrückt werden bzw. ermittelt werden. Darüber hinaus kann es noch eine untere Grenze geben, unterhalb welcher eine angetriebene Arbeitsmaschine, wie etwa ein Seitenkanalverdichter, nicht betrieben werden sollte. Auch diese untere Grenze kann durch entsprechende korrelierende Strom- oder Leistungswerte ausgedrückt werden. Es ergibt sich insgesamt ein Feld, in welchem aufgrund der dann bekannten Zusammenhänge praktisch beliebige Kennlinien gefahren werden können.

Ein solches Feld ist beispielhaft in Fig. 13 dargestellt. Hier ist wiederum der Volumenstrom über der Druckdifferenz aufgetragen. Die Verhältnisse sind etwas schematisiert dargestellt. Es ist eine erste Grenzlinie, Kurve G1, dargestellt, welche einer maximalen Drehzahl entspricht, eine weitere Grenzlinie G2, welche eine obere Stromgrenze darstellt, eine weitere Grenzlinie G3, welche der thermischen Grenze entspricht und schließlich eine Grenzlinie G4, welche einer unteren Betriebsgrenze entspricht (z.B. Pumpengrenze eines Verdichters). Beispielhaft ist eine Verbraucherlinie V1 eingezeichnet.

Innerhalb der Grenzlinien G1 bis G4 kann das Feld beliebig gefahren und ausgenutzt werden. Aufgrund der erfindungsgemäßen Regelung in Abhängigkeit des im Frequenzumrichter gemessenen elektrischen Stroms bzw. der aufgenommenen elektrischen Leistung kann das gegebene Feld praktisch beliebig ausgenutzt werden. Insbesondere können auch Kurven oder Geraden für konstanten Volumenstrom oder konstante Druckdifferenz gefahren werden.

## Patentansprüche

1. Verfahren zur Regelung eines mittels eines Drehstrom- oder Wechselstrommotors (2) angetriebenen Aggregates wie einer Pumpe oder eines Verdichters, bspw. eines Seitenkanalverdichters (1), mit Förderkennwerten wie Volumenstrom oder Druckdifferenz, wobei dem Motor (2) ein Frequenzumrichter (5) vorgeschaltet ist und im oder nach dem Frequenzumrichter (5) eine Messung des elektrischen Stroms erfolgt, wobei die gemessene Stromstärke zur Einstellung eines Förderkennwertes herangezogen wird, **dadurch gekennzeichnet, daß** empirisch eine Stromkennlinie (k) oder eine Leistungskennlinie für einen Förderkennwert in Abhängigkeit von der Frequenz (f) ermittelt wird, daß die Kennlinie (k) in einem Speicherelement niedergelegt wird und daß eine gewünschte Förderkurve (K') oder ein gewünschter Förderkennwert hiervon ausgehend durch eine Umrechnung der zugehörigen Stromstärke oder der zugehörigen elektrischen Leistung rechnerisch ermittelt wird.

2. Verfahren nach Anspruch 1, **dadurch gekennzeichnet, daß** mittels eines Potentiometers des Frequenzumrichters (5) unmittelbar auf die elektrische Leistung oder den elektrischen Strom eingewirkt wird.

3. Verfahren nach einem oder mehreren der vorhergehenden Ansprüche, **dadurch gekennzeichnet, daß** der gemessene Strom (i) bzw. die gemessene elektrische Leistung mit einem in Abhängigkeit von der Aggregatleistung zulässigen maximalen Strom (i) grenz bzw. einer maximalen elektrischen Leistung verglichen wird und daß ein Überschreiten des jeweils zulässigen Stroms (i) grenz bzw. der jeweils zulässigen elektrischen Leistung unterbunden wird.

## Claims

1. Method for regulating a unit such as pump or a compressor, for example a side channel compressor (1), the unit being driven by means of a three-phase motor or an alternating current motor (2) and having delivery characteristics such as volume flow or pressure difference, a frequency converter (5) being connected before the motor (2) and a measurement of the electric current being effected in or after the frequency converter (5), the measured intensity of the current being used to adjust a delivery characteristic, **characterized in that** a flow characteristic curve (k) or a power characteristic curve is established empirically for a delivery characteristic in dependence on the frequency (f), that the characteristic curve (k) is stored in a storage element and that a desired delivery curve (K') or a desired delivery characteristic deriving therefrom is computationally established by a conversion of the associated current intensity or of the associated electric power.

2. Method according to Claim 1, **characterized in that** there is direct action on the electric power or on the electric current by means of a potentiometer of the frequency converter (5).

**3.** Method according to one or more of the preceding claims, **characterized in that** the measured current (i) or the measured electric power is compared with a maximum current $(i)_{grenz}$ which is permissible in dependence on the unit power, or the measured current (i) or the measured electric power is compared with a maximum electric power, and that any exceeding of the respective maximum current $(i)_{grenz}$ is prevented or any exceeding of the respective permissible electric power is prevented.

**Revendications**

**1.** Procédé de réglage d'un groupe entraîné par un moteur (2) à courant polyphasé ou alternatif, tel qu'une pompe ou un compresseur, par exemple un compresseur (1) à canal latéral, avec des valeurs caractéristiques de refoulement telles que le débit volumique ou la différence de pression, dans lequel le moteur (2) est alimenté via un convertisseur de fréquence (5) et dans ou après le convertisseur (5) est effectuée une mesure du courant électrique, l'intensité mesurée du courant est extraite pour le réglage d'une valeur caractéristique de refoulement, **caractérisé en ce qu'**on détermine empiriquement une ligne caractéristique (k) du courant ou une ligne caractéristique de la puissance pour une valeur caractéristique de refoulement, en fonction de la fréquence (f), **en ce qu'**on met en mémoire la ligne caractéristique (k) dans un élément de mémoire et **en ce qu'**on détermine par le calcul une courbe de refoulement (K') souhaitée ou une valeur caractéristique de refoulement souhaitée en partant de cette ligne caractéristique, par une conversion de l'intensité associée du courant ou de la puissance électrique associée.

**2.** Procédé selon la revendication 1, **caractérisé en ce qu'**on agit au moyen d'un potentiomètre du convertisseur de fréquence (5), directement sur la puissance électrique ou le courant électrique.

**3.** Procédé selon l'une ou plusieurs des revendications précédentes, **caractérisé en ce que** le courant mesuré (i) ou la puissance électrique mesurée est limité(e) par un courant maximum (i) admissible en fonction de la puissance du groupe ou respectivement comparée à une puissance électrique maximale, et **en ce qu'**un dépassement du courant admissible correspondant (i) est limité ou respectivement la puissance électrique correspondante admissible est interrompue.

Fig. 1

Fig. 2

Fig. 3

Fig. 4

*Fig·5*

*Fig·6*

*Fig·7*

*Fig·8*

**Fig. 9**

**Fig. 10**

**Fig. 11**

**Fig. 12**

EP 0 916 026 B1

# Fig. 12 a

# Fig. 13

11